# DEMANDE DE BREVET EUROPEEN

(11) **EP 1 731 590 A2**
(43) Date de publication de la demande: **13.12.2006**
(21) Numéro de dépôt: 06290918.9
(22) Date de dépôt: 06.06.2006
(51) Int. Cl.: C10L 1/10, C10L 1/14, C10L 10/00, F02M 25/00, B60K 15/00

(54) **Additif pour un dispositif d'introduction automatique de moyens formant additif dans un réservoir de carburant d'un véhicule automobile**

(30) Priorité: 06.06.2005 FR 0505728; 06.06.2005 FR 0505729; 06.06.2005 FR 0505730
(71) Demandeur: PEUGEOT CITROËN AUTOMOBILES S.A., 78140 Velizy Villacoublay (FR)
(72) Inventeur: Maire François, 92400 Courbevoie (FR); Crepeau Gérald, 92700 Colombes (FR)
(74) Mandataire: Habasque, Etienne J. Jean-François

(57) **Abrégé**

Cet additif pour un dispositif d'introduction destiné à un véhicule qui comporte des moyens de dépollution, disposés dans la ligne d'échappement du moteur (1) du véhicule, pour maintenir à une valeur prédéterminée, la concentration d'additif dans le carburant contenu dans le réservoir (2) et comportant un réservoir (10) pour les moyens formant additif, des moyens (13, 14) d'injection d'additif reliés au réservoir (10) d'additif et au réservoir (2) de carburant, des moyens (17) de mesure de la quantité de carburant introduite dans le réservoir (2) au cours de chaque opération de réapprovisionnement et des moyens (20) de calcul et de commande permettant de calculer la quantité correspondante d'additif à injecter dans le réservoir (2) pour maintenir la concentration d'additif dans le carburant à la valeur prédéterminée et de commander les moyens (13, 14) d'injection pour réaliser l'injection de la quantité d'additif calculée, est caractérisé en ce que les moyens formant additif dans le réservoir d'additif comprennent un mélange d'additifs contenant au moins un additif d'aide à la régénération des moyens de dépollution.

## Description

La présente invention concerne un additif pour un dispositif d'introduction automatique en quantités dosées de moyens formant additif dans le réservoir de carburant d'un véhicule automobile.

Plus particulièrement, l'invention se rapporte à un tel dispositif dans lequel le véhicule comporte un moteur thermique tel que par exemple un moteur Diesel, dont la ligne d'échappement comporte des moyens de dépollution constitués par exemple par un filtre à particules ou autres.

On sait en effet qu'il existe déjà dans l'état de la technique, des dispositifs d'introduction dans le réservoir de carburant d'un additif d'aide à la régénération de ce type de filtres à particules, l'additif étant destiné à être mélangé au carburant et à se déposer avec les particules auxquelles il est mélangé sur un tel filtre, afin d'abaisser la température de combustion des particules, ce qui permet de faciliter la régénération du filtre.

De tels dispositifs d'introduction comportent alors un réservoir pour les moyens formant additif, des moyens d'injection d'une quantité de moyens formant additif reliés au réservoir de carburant et au réservoir de moyens formant additif, des moyens de mesure de la quantité de carburant introduite dans le réservoir au cours d'une opération de réapprovisionnement et des moyens de calcul et de commande permettant de calculer la quantité correspondante de moyens formant additif à injecter dans le réservoir de carburant, pour maintenir la concentration des moyens formant additif dans le réservoir à la valeur prédéterminée et de commander les moyens d'injection pour réaliser l'injection de la quantité de moyens formant additif calculée.

On pourra par exemple se reporter aux documents FR-2 668 203, FR-2 669 967 et FR-2 714 694, pour une description complète de tels dispositifs.

Le but de l'invention est de perfectionner de tels dispositifs pour améliorer les prestations et/ou la durabilité des moteurs des véhicules.

A cet effet, l'invention a pour objet un additif pour un dispositif d'introduction automatique en quantités dosées de moyens formant additif dans le réservoir de carburant d'un véhicule automobile comportant des moyens de dépollution disposés dans la ligne d'échappement du moteur du véhicule, pour maintenir à une valeur prédéterminée, la concentration d'additif dans le carburant contenu dans le réservoir et comportant un réservoir pour les moyens formant additif, des moyens d'injection d'additif reliés au réservoir d'additif et au réservoir de carburant, des moyens de mesure de la quantité de carburant introduite dans le réservoir au cours de chaque opération de réapprovisionnement et des moyens de calcul et de commande permettant de calculer la quantité correspondante d'additif à injecter dans le réservoir pour maintenir la concentration d'additif dans le carburant contenu dans le réservoir à la valeur prédéterminée et de commander les moyens d'injection pour réaliser l'injection de la quantité d'additif calculée, caractérisé en ce que les moyens formant additif dans le réservoir d'additif comprennent un mélange d'additifs contenant au moins un additif d'aide à la régénération des moyens de dépollution, et en outre au moins un autre additif choisi dans le groupe comprenant :
- un additif d'amélioration de la distribution de carburant dans le moteur,
- un additif d'amélioration des performances de fonctionnement du moteur, et
- un additif d'amélioration de la stabilité du fonctionnement du moteur.

Suivant d'autres caractéristiques de l'invention :
- l'additif d'améüoration de la distribution de carburant dans le moteur comporte un additif antimousse, un additif dégivrant, un additif d'opérabilité à froid, un additif d'écoulement et/ou un additif anti-corrosion ;
- l'additif d'amélioration des performances de fonctionnement du moteur comporte un additif procétane, un additif détergent, un additif d'amélioration du pouvoir lubrifiant du carburant, un additif inhibiteur de fumées et/ou un additif de réduction des pertes par friction dans le moteur ; et
- l'additif d'amélioration de la stabilité de fonctionnement du moteur comporte un additif anti-oxydant, un additif stabilisateur, un additif désactivateur de métaux et/ou un additif dispersant.

L'invention sera mieux comprise à la lecture de la description qui va suivre, donnée uniquement à titre d'exemple et faite en se référant aux dessins annexés, sur lesquels :
- la figure 1 représente un schéma synoptique illustrant la structure et le fonctionnement d'un dispositif d'introduction de moyens formant additif selon l'invention ;
- la figure 2 représente un tableau illustrant le volume utile d'additif à embarquer à bord du véhicule et la concentration théorique atteignable en additif détergent en fonction du dosage nécessaire d'additif d'aide à la régénération et de la quantité de détergent introduite dans cet additif ;
- la figure 3 représente un tableau d'une variante de réalisation ;
- la figure 4 représente des résultats d'essais réalisés sur banc moteur montrant l'efficacité du système ;
- la figure 5 représente un tableau illustrant le volume utile d'additif à embarquer à bord du véhicule et la concentration théorique atteignable en additif FM en fonction du dosage nécessaire d'additif d'aide à la régénération et de la quantité de FM introduite dans cet additif ; et
- la figure 6 représente un tableau d'une variante de réalisation.

Comme cela a été mentionné précédemment, le but de l'invention est de proposer un additif pour un dispositif d'additivation de carburant embarqué à bord d'un véhicule, afin d'améliorer les prestations du moteur de celui-ci ainsi que la durabilité d'un véhicule par exemple Diesel, équipé de moyens de dépollution tels qu'un filtre à particules, fonctionnant à partir d'une additivation embarquée.

Un tel dispositif permet alors d'améliorer la durabilité des motorisations Diesel en agissant sur l'usure moteur, l'encrassement des injecteurs, le grippage par exemple d'une pompe d'injection et des injecteurs, la propreté de celui-ci, etc..

Un tel dispositif permet également d'améliorer l'agrément de conduite notamment en termes de bruit, de facilité de démarrage, de puissance ou encore de consommation.

De plus, un tel dispositif doit également faciliter le respect des réglementations relatives aux émissions polluantes des moteurs, telles que par exemple les fumées, etc.

Un tel dispositif ne doit également entraîner aucun changement relatif à l'architecture du moteur et à son environnement, ce qui permet en particulier de réduire les coûts, notamment pour les véhicules déjà équipés d'un dispositif d'additivation notamment pour filtre à particules.

Enfin, un tel dispositif doit également permettre l'utilisation d'additifs pouvant être adaptés en fonction des besoins.

Un tel dispositif met alors en oeuvre des dispositifs d'additivation déjà développés dans les véhicules à motorisation Diesel.

Plusieurs caractéristiques liées au fonctionnement des moteurs sont en effet reconnues comme généralement très importantes pour les clients. Leur importance relative dépend du type du moteur et du cycle utilisé, mais on peut considérer que parmi ces caractéristiques importantes, on trouve :
- le démarrage et l'opérabilité à froid,
- l'usure moteur,
- l'encrassement du moteur et des injecteurs,
- le grippage des pompes et des injecteurs,
- la puissance,
- le bruit,
- la maintenance du filtre à carburant,
- la consommation en carburant,
- l'intervalle de vidange,
- les émissions polluantes, etc..

La définition d'un moteur à un impact d'ordre un sur la plupart de ces caractéristiques. Cependant, ces dernières sont affectées par les propriétés du carburant et par conséquent, par la présence ou non d'additifs ainsi que leur concentration dans celui-ci .

Les additifs pour carburant Diesel sont utilisés pour une large variété d'objectifs. Cependant, ils peuvent être groupés dans trois catégories majeures, à savoir :
- les additifs d'amélioration de la distribution de carburant dans le moteur,
- les additifs d'amélioration de performances du moteur, et
- les additifs d'amélioration de la stabilité de fonctionnement de celui-ci.

Dans le dispositif selon l'invention, on propose d'utiliser un mélange d'additifs qui comporte au moins un additif d'aide à la régénération des moyens de dépollution intégrés dans la ligne d'échappement du moteur et au moins un autre additif de l'un ou plusieurs des types d'additifs mentionnés précédemment.

Parmi les additifs d'amélioration de la distribution de carburant dans le moteur, on trouve par exemple des additifs antimousse. Certains carburants Diesel ont en effet tendance à mousser lorsqu'ils sont pompés dans le réservoir du véhicule. Cette mousse peut perturber le remplissage complet du réservoir. La plupart des additifs antimousse sont des organosilicones et sont utilisés à des concentrations de 10ppm au moins.

D'autres additifs sont par exemple des additifs dégivrants.

L'eau libre des gazoles givre en effet à basse température. Les cristaux de glace résultant peuvent alors boucher des lignes du circuit de carburant ou des filtres de carburant et bloquer le passage de celui-ci. Des alcools de poids moléculaire bas ou glycols peuvent alors être ajoutés au carburant pour prévenir la formation de cette glace. Ces alcools/glycols se dissolvent dans l'eau libre préférentiellement et donnent un point réfrigérant inférieur au résultat obtenu avec de l'eau seule.

D'autres additifs sont des additifs d'opérabilité à froid. La plupart de ces additifs sont des polymères qui réagissent réciproquement avec les cristaux que forme le carburant quand ce dernier est refroidi en dessous de son point de trouble. Ces polymères atténuent l'effet des cristaux sur le débit du carburant en modifiant leur dimension, leur forme et/ou leur degré d'agglomération. Un additif particulier ne sera pas d'une efficacité comparable suivant la nature du carburant. Pour être efficace, ces additifs d'opérabilité à froid doivent être mélangés dans le carburant avant que tout cristal ne soit formé, c'est-à-dire quand le carburant est au dessus de son point de trouble.

Ces additifs apportent alors des gains en température avant que le carburant ne se trouble ou se fige.

Des additifs d'écoulement peuvent également être utilisés. Ces additifs d'écoulement comprennent par exemple des polymères de hauts poids moléculaires qui réduisent la turbulence dans les fluides et peuvent augmenter le débit de 20 à 40%. Ces additifs sont utilisés avec des concentrations en dessous de 15 ppm de façon typique. Quand ce produit traverse une pompe, l'additif est brisé en plus petites molécules, ce qui n'entraîne aucun effet sur les performances du moteur.

Des additifs inhibiteurs de corrosion peuvent également être utilisés. Ces inhibiteurs de corrosion sont des composés qui s'attachent aux surfaces du métal et forment une barrière qui prévient l'attaque par des agents corrosifs. Ils sont situés dans une gamme de concentration de 5 ppm à 15 ppm.

Des additifs d'amélioration des performances de fonctionnement des moteurs peuvent également être utilisés.

Cette classe d'additifs permet en effet d'améliorer les performances de fonctionnement d'un moteur, mais les effets des différents additifs de cette classe, sont appréciés pour des délais différents. Tout avantage fourni par un additif procétane par exemple est immédiat, alors que les effets bénéfiques des additifs de type détergent ou des additifs d'amélioration du pouvoir lubrifiant sont vus à plus long terme, c'est-à-dire souvent mesurés après quelques dizaines de milliers de kilomètres parcourus par le véhicule.

Ainsi, par exemple, des additifs de type procétane permettent de réduire le bruit de la combustion ainsi que les fumées.

L'avantage de l'utilisation d'un tel additif varie selon la conception du moteur et les cartographies moteur utilisées.

L'additif procétane le plus largement utilisé est le 2-Ethylhexyl-nitrate (EHN). L'EHN est instable thermiquement et se décompose aux hautes températures dans la chambre de combustion du moteur. Ces produits de combustion aident la combustion du moteur et donc raccourcissent la période du délai d'auto-inflammation du carburant. L'augmentation de l'indice de cétane dans le carburant pour une concentration donnée d'EHN varie d'un carburant à un autre. Elle est d'autant plus importante que le carburant a un indice de cétane naturel déjà relativement haut. L'augmentation d'accroissement devient d'autant plus faible que la concentration d'EHN est augmentée. L'EHN est usuellement utilisé dans une gamme de concentration variant de 0,05% en masse à 0,4% en masse et permet d'augmenter de 3 à 8 points l'indice de cétane du carburant.

D'autres nitrates d'alkyl ou nitrates d'éther et quelques composés nitreux, sont également des additifs de type procétane possibles. Le di-tertiaire butyl peroxyde a été introduit récemment sur le marché.

Il est à noter qu'un inconvénient de l'EHN est qu'il diminue la stabilité thermique de quelques carburants.

Des additifs détergents peuvent également être utilisés. Le carburant forme en effet des dépôts au niveau des trous des injecteurs en particulier. L'ampleur de la formation du dépôt varie avec la conception du moteur, la composition du carburant et la composition du lubrifiant. Les dépôts excessifs peuvent modifier l'aérodynamique par exemple du jet de l'injecteur, laquelle à son tour peut entraver le mélange air-carburant. Dans certains cas, il en résulte une surconsommation de carburant, une perte de puissance du moteur et des émissions de polluants augmentées.

Les additifs détergents (polyisobutène succinimine amide ou amine (PIBSA), polymères sans cendre, dérivés d'alkylphénols, amides d'acides gras) peuvent nettoyer l'injecteur et/ou laisser propres les injecteurs. Ces additifs sont composés d'un groupe polaire qui se lie aux dépôts et/ou aux précurseurs du dépôt et d'un groupe apolaire qui se dissout dans le carburant. Donc, les additifs détergents dissolvent les dépôts déjà formés et entravent les précurseurs de dépôt, afin d'éviter la formation de nouveaux dépôts. Les additifs détergents sont utilisés dans la gamme de concentration de 10 ppm à 1000 ppm par kilo de carburant.

Des additifs d'amélioration du pouvoir lubrifiant peuvent également être utilisés pour éviter le grippage des pompes à haute pression notamment et des injecteurs, à cause du mauvais pouvoir lubrifiant des carburants. Ils contiennent un groupe polaire qui est attiré par les surfaces métalliques pour former un film de protection à la surface. Le film agit comme une huile lorsque deux surfaces métalliques entrent en contact. Deux types de fonctionnalité chimique de ces additifs, acide gras et esters, sont couramment utilisés. Les acides gras sont utilisés dans la gamme de concentration de 10 ppm à 50 ppm. Puisque les esters sont moins polaires, ils exigent une plus haute gamme de concentration de 50 ppm à 250 ppm.

Des additifs inhibiteurs de fumées peuvent également être utilisés. Quelques composés organométalliques agissent comme catalyseurs de combustion. Ces composés permettent de réduire les émissions de fumées noires qui résultent d'une combustion incomplète. Cependant, ces composés métalliques peuvent être interdits dans certains pays.

Des additifs réduisant les pertes par friction permettent de réduire les frottements dans le circuit carburant entraînant ainsi un gain en matière de consommation de carburant. Sur certains véhicules, des gains en consommation supérieurs à 4% ont été constatés lors d'essais.

Ces additifs sont également appelés additifs FM pour « Friction Modifier » ou additifs « d'extrême pression ».

De même, des additifs d'amélioration de la stabilité de fonctionnement des moteurs peuvent être envisagés.

L'instabilité des carburants entraîne la formation de gommes qui participent à l'encrassement des injecteurs, au colmatage du filtre à carburant et à l'encrassement des pompes et du système d'injection. Ces additifs ont des performances qui sont conditionnées par leur utilisation dans un carburant approprié ou non.

Des additifs de type antioxydants peuvent également être utilisés. Un mode d'instabilité du carburant est l'oxydation. L'oxygène dans la petite quantité d'air dissoute dans le carburant attaque des composés réactifs présents dans le carburant. L'oxydation est le résultat d'une succession de mécanismes complexes. Les antioxydants travaillent en interrompant ces mécanismes. Les phénols ramifiés et certaines amines, telles que la phénylenediamine, sont les oxydants les plus communément rencontrés. Ils sont en effet utilisés dans une gamme de concentration de 10 ppm à 80 ppm.

Des additifs stabilisateurs peuvent également être employés. Les réactions acide-base sont un autre mode d'instabilité du carburant. Les additifs stabilisateurs qui préviennent ces réactions sont des amines de base forte et sont utilisés dans la gamme de concentration de 50 ppm à 150 ppm.

Ils réagissent avec les acides faibles pour former des produits qui restent dissous dans le carburant mais qui ne peuvent plus réagir.

Des additifs désactivateurs de métaux peuvent également être envisagés. La présence des métaux à l'état de trace (Cu et Fe par exemple) suffit pour accélérer le processus de dégradation du carburant. Les désactivateurs neutralisent leurs effets catalytiques. Ils sont utilisés dans la gamme de concentration de 1 ppm à 15 ppm.

Enfin, des additifs dispersants peuvent également être prévus. Ces additifs dispersants ne préviennent pas une réaction de l'instabilité du carburant, mais ils dispersent les particules formées et préviennent l'agglomération de particules assez grosses pour boucher le filtre à carburant ou les injecteurs. Les additifs dispersants sont utilisés dans une gamme de concentration de 15 ppm à 100 ppm.

Un ou plusieurs des types d'additifs mentionnés précédemment peuvent alors être utilisés en mettant en oeuvre des systèmes déjà embarqués à bord des véhicules, tels que les dispositifs d'introduction automatique de quantités dosées de moyens formant additif, dans le réservoir de carburant d'un véhicule.

En fait, ces dispositifs ont été développés pour ajouter au carburant, un additif d'aide à la régénération des moyens de dépollution, tels que par exemple un filtre à particules, intégrés dans une ligne d'échappement d'un moteur par exemple Diesel de véhicule automobile.

Cet additif est mis en solution dans un solvant à une certaine concentration déterminée sur un véhicule donné.

Or, il apparaît que ce solvant peut être modifié afin de permettre l'ajout d'au moins un autre additif tel que décrit précédemment, compatible avec l'additif d'aide à la régénération du filtre à particules, soit en changeant le solvant de l'additif, soit en augmentant le volume du réservoir d'additif.

Ceci permet alors d'améliorer les prestations moteur et la durabilité des véhicules Diesel par l'utilisation d'additifs carburant adaptés pour répondre tant à l'amélioration constante de la satisfaction du client qu'à la résolution de problèmes clientèle liés à la mauvaise qualité des carburants pouvant être rencontrée par le client.

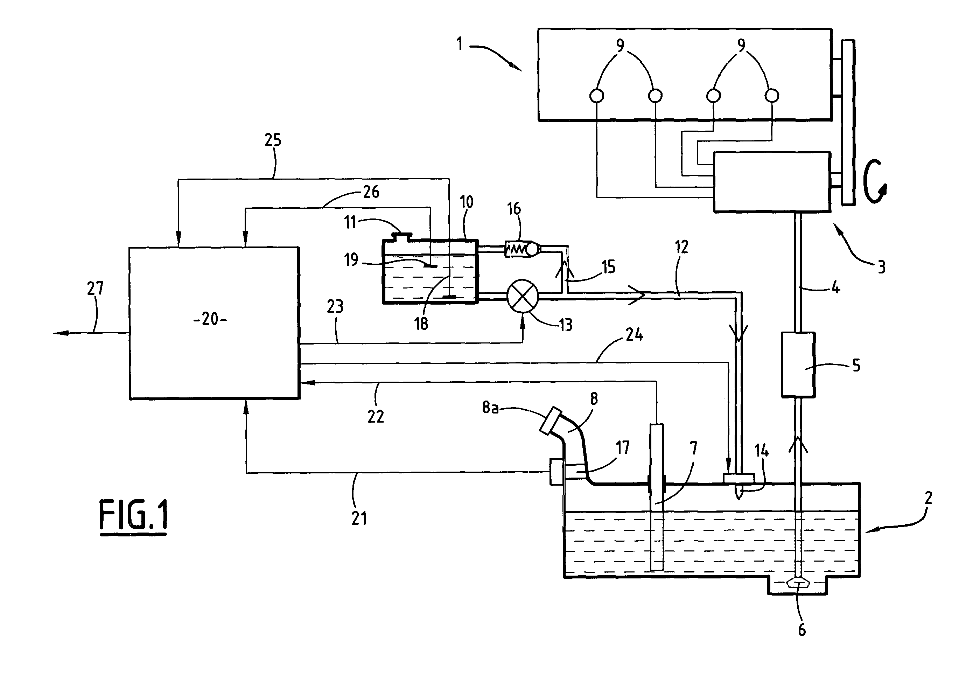

Un tel dispositif est illustré sur la figure 1 annexée.

Sur cette figure, on a en effet représenté schématiquement un moteur Diesel, désigné dans son ensemble par la référence 1, d'un véhicule automobile et qui est alimenté en gazole à partir d'un réservoir de carburant 2, par l'intermédiaire d'une pompe d'injection 3.

La pompe d'injection 3 est reliée au réservoir 2 par une conduite d'aspiration 4 sur laquelle est intercalé un filtre 5.

La conduite d'aspiration 4 comporte une partie d'extrémité opposée à la pompe 3 qui est plongée à l'intérieur du réservoir 2 pour déboucher, à sa partie inférieure, sous la forme d'une crépine d'aspiration 6.

De plus, la pompe 3 est reliée aux cylindres du moteur 1 par des conduites assurant chacune l'alimentation d'un injecteur 9 associé à un cylindre du moteur.

Des moyens à rampe commune d'alimentation peuvent également être envisagés.

Le réservoir 2 est équipé d'une jauge de niveau 7 permettant de déterminer la position du niveau du gazole dans ce réservoir 2.

Le réservoir 2 comporte également une tubulure de remplissage 8 débouchant dans la partie supérieure de ce réservoir 2 et équipée d'un bouchon de fermeture 8a.

La ligne d'échappement du véhicule, dont la propulsion est assurée par le moteur Diesel, comporte des moyens de dépollution comme par exemple un filtre à particules, non représenté, permettant d'arrêter les particules de suie formées dans les gaz d'échappement du moteur.

Le véhicule comporte un réservoir d'additif 10 muni d'un bouchon de remplissage 11 et destiné à contenir un mélange d'additifs tels que décrits précédemment en solution dans un solvant liquide.

Une conduite 12 d'injection d'additif liquide est reliée au réservoir d'additif 10, au voisinage de sa partie inférieure. Une pompe de dosage 13 est intercalée sur la conduite 12 qui est reliée, à son extrémité opposée au réservoir d'additif 10, à un injecteur 14 débouchant directement dans le réservoir de carburant 2.

Une conduite de retour 15 communiquant avec la conduite d'injection 12, en aval de la pompe 13, est reliée à la partie supérieure du réservoir d'additif 10. Un régulateur de pression 16 constitué par un clapet à bille comportant un ressort de tarage est intercalé sur la conduite de retour 15.

Le dispositif d'introduction automatique d'additif selon l'invention comporte également un boîtier électronique de commande 20 intégré au véhicule et permettant d'assurer toutes les fonctions de réglage et de surveillance de l'introduction d'additif en quantités dosées dans le réservoir de carburant 2 du véhicule.

Le dispositif d'introduction automatique d'additif comporte également des moyens de mesure de la quantité de carburant introduite dans le réservoir 2 au cours de chaque opération de réapprovisionnement.

Ainsi que représenté sur cette figure 1, ces moyens de mesure sont formés par exemple par un débitmètre mono-directionnel 17 placé directement dans la tubulure 8 de remplissage du réservoir de carburant 2.

Le débitmètre 17 est relié au boîtier électronique 20 par un câble électrique 21 qui permet de transmettre automatiquement audit boîtier 20 la quantité de carburant introduite dans le réservoir 2 lors du réapprovisionnement de ce réservoir 2 en carburant.

La jauge de niveau 7 associée au réservoir de carburant 2 est reliée par un câble électrique 22 au boîtier 20, de manière à transmettre à ce boîtier 20 ainsi qu'au conducteur du véhicule, un signal électrique représentatif du niveau de carburant à l'intérieur dudit réservoir 2.

Le boîtier électronique 20 est relié par des câbles électriques, respectivement 23 et 24, à la pompe 13 et à l'injecteur 14, de manière à transmettre à ces éléments du dispositif d'introduction d'additif un signal de commande assurant une injection en quantité dosée, du mélange d'additifs dans le réservoir 2 de carburant, dans les conditions qui seront décrites ultérieurement.

Une jauge de niveau 18 reliée au boîtier électronique 20 par un câble électrique 25 permet de transmettre à ce boîtier 20 un signal électrique lorsque le niveau d'additif dans le réservoir 10 est parvenu dans une position minimale voisine du fond de ce réservoir 10.

Une sonde de température 19 disposée dans le réservoir d'additif 10 permet de transmettre au boîtier électronique 20, par l'intermédiaire d'un câble électrique 26, un signal représentatif de la température de cet additif liquide à l'intérieur dudit réservoir 10.

Le boîtier électronique 20 comporte au moins une sortie 27 constituée par au moins un câble électrique relié à des voyants qui peuvent être situés avantageusement dans l'habitacle du véhicule automobile.

L'allumage d'un premier voyant est obtenu lorsque le niveau d'additif détecté par la jauge 18 dans le réservoir d'additif 10 est parvenu dans la position correspondant au niveau minimal voisin du fond de ce réservoir 10 et l'allumage d'un second voyant est obtenu lorsque le niveau de carburant détecté par la jauge 7 dans le réservoir de carburant 2 est parvenu dans une position correspondant au niveau minimal voisin du fond de ce réservoir de carburant 2.

Le boîtier électronique 20 reçoit également comme donnée d'entrée un signal électrique représentatif de la concentration déterminée en additif qu'il est nécessaire de maintenir dans le carburant, c'est-à-dire dans le gazole injecté dans les cylindres du moteur 1.

Cette donnée relative à la concentration d'additif dans le carburant peut être également déterminée a priori et correspondre à une valeur fixe quelles que soient les conditions d'utilisation du moteur. Dans ce cas, les composants électroniques sont prévus de manière à prendre en compte cette valeur prédéterminée et invariable.

Certains éléments du dispositif d'introduction d'additif peuvent être constitués par des éléments utilisés de manière classique pour la construction des moteurs de véhicules automobiles et de leurs organes de commande.

C'est ainsi que l'ensemble d'injection d'additif comprenant la pompe 13, le régulateur de pression 16 et éventuellement l'injecteur 14 peut être constitué par un dispositif d'injection classique tel qu'utilisé sur les véhicules automobiles comportant un moteur à injection.

En se reportant maintenant à cette figure 1, on va décrire le fonctionnement du dispositif d'introduction automatique en quantités dosées d'additif dans le réservoir de carburant du véhicule automobile pour maintenir à une valeur prédéterminée la concentration d'additif dans le carburant.

Lorsque l'utilisateur du véhicule effectue un réapprovisionnement du réservoir 2 en carburant, il introduit le pistolet de la pompe dans la tubulure de remplissage 8.

Ainsi, au cours de l'écoulement du carburant dans cette tubulure 8, le débitmètre 17 mesure directement, dans la tubulure 8, la quantité de carburant introduite dans le réservoir 2.

Le débitmètre 17 transmet donc par le câble électrique 21 le signal représentatif de la quantité de carburant introduite dans le réservoir 2.

Au démarrage du moteur 1, le contact électrique du véhicule permet de mettre en fonctionnement le boîtier électronique 20 pour la détermination et la réalisation de l'injection d'additif dans le réservoir de carburant 2.

A cet effet, le boîtier de commande 20 effectue le calcul de la quantité d'additif à introduire dans le réservoir 2, en fonction de la quantité de carburant introduite dans ce réservoir 2 et de la concentration prédéterminée en additif du carburant, pour obtenir des conditions de fonctionnement satisfaisantes du filtre à particules.

Le signal représentatif de la quantité d'additif à introduire dans le réservoir de carburant 2 est transformé en un signal de commande de la pompe d'injection 13 et en un signal de commande de l'injecteur 14.

Le signal de commande de l'injecteur 14 permet de maintenir cet injecteur ouvert pendant un temps suffisant pour réaliser l'injection de la quantité déterminée d'additif à pression constante dans le réservoir de carburant 2, la pompe 13 restant en fonctionnement pendant un temps suffisant pour réaliser cette injection directement dans ledit réservoir de carburant 2.

A l'issue de l'injection d'additif, le gazole contenu dans le réservoir 2 présente une concentration en additif qui correspond parfaitement à la concentration prédéterminée nécessaire pour obtenir un fonctionnement satisfaisant notamment du filtre à particules.

En outre, la concentration en additif du gazole dans le réservoir 2 est parfaitement homogène du fait du brassage assuré par la pompe d'injection 3.

Le moteur 1 et le filtre à particules qui lui est associé dans la ligne d'échappement peuvent alors fonctionner dans des conditions satisfaisantes.

La température de l'additif injecté directement dans le réservoir 2 peut être réglée grâce à la jauge de température 19 et un circuit de mise en température de l'additif dans le réservoir 10.

Selon une variante, la température mesurée par la jauge 19 peut être prise en compte par le boîtier électronique 20 pour calculer le temps d'injection de l'additif à température constante. En effet, le temps d'injection d'une quantité déterminée d'additif à pression constante varie en fonction de la viscosité, donc de la température de cet additif.

On conçoit alors qu'une telle structure permet d'injecter dans le réservoir de carburant, un mélange d'additifs comprenant un ou plusieurs des additifs tels que mentionnés précédemment, pour permettre d'éviter l'encrassement des injecteurs du moteur et éventuellement d'un turbocompresseur associé à celui-ci, de stabiliser l'additif d'aide à la régénération des moyens de dépollution afin de pouvoir diminuer sa concentration tout en empêchant la formation de gommes et/ou de sédiments, d'améliorer les propriétés du carburant local en améliorant le pouvoir lubrifiant de celui-ci ou le démarrage à froid et de réduire les pertes par frottement et ainsi abaisser la consommation de carburant par exemple.

Toutes autres combinaisons d'effets ou introduction d'effets sont possibles, à savoir par exemple : réduction des fumées, fluidification du carburant à froid, etc...

Bien entendu, d'autres modes de réalisation encore peuvent être envisagés.

On sait en effet que le carburant forme des dépôts au niveau des trous des injecteurs. L'ampleur de la formation du dépôt varie avec la conception du moteur, la composition du carburant et la composition du lubrifiant. Les dépôts excessifs peuvent modifier l'aérodynamique du jet de l'injecteur, laquelle à son tour peut entraver le mélange air-carburant, se traduisant comme cela a été indiqué précédemment, par une surconsommation en carburant, une perte de puissance du moteur et des émissions polluantes augmentées.

Or, l'encrassement des injecteurs réduit le diamètre de leurs trous, entraînant ainsi une perte de performances ainsi qu'un dérèglement des émissions du moteur.

Ceci est rédhibitoire pour le choix de nouvelles technologies conformes aux normes Euro 5 puisque des injecteurs à diamètre de trous inférieurs à 110 µm ne peuvent alors pas être utilisés. Avec l'utilisation d'un additif de type détergent, le diamètre des trous atteignable peut par exemple être de l'ordre de 95 µm voire moins, ce qui permet alors une mise au point de nouveaux groupes motopropulseurs permettant une diminution des émissions en NOx de 10 à 20% et de satisfaire aux normes Euro 5 sans surcoûts, liés à l'adjonction d'un système de post-traitement additionnel coûteux.

On peut alors inclure dans le réservoir 10, un additif détergent tel que décrit précédemment pur ou stabilisé, compatible avec un solvant paraffinique par exemple, déjà associé à l'additif d'aide à la régénération du filtre à particules.

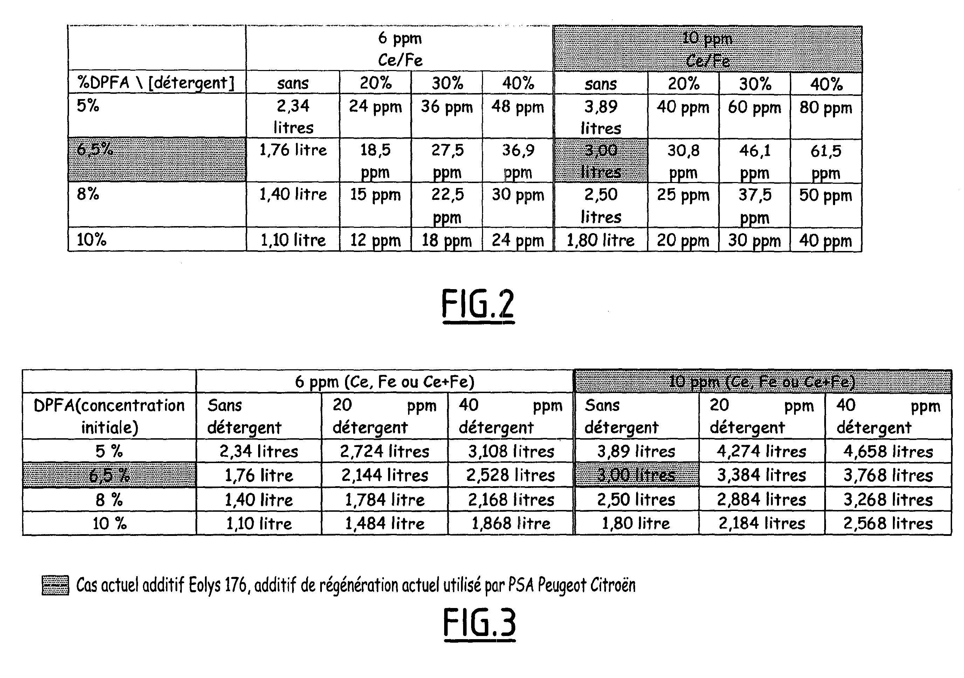

Le tableau de la figure 2 donne un premier exemple de volume utile d'additif à embarquer et la concentration théorique atteignable en additif détergent en fonction du dosage nécessaire d'additif FAP (6 ou 10 ppm) et de la quantité de détergent introduite dans l'additif (20, 30 ou 40%).

Le tableau de la figure 3 est quant à lui relatif à un tel volume pour une durabilité de 240000 km avec une consommation de 8 litres/100 km. Dans ce cas, si on vise une concentration en détergent de 40 ppm ou de 20 ppm, le volume nécessaire de détergent à embarquer, est respectivement de 0,768 litre ou de 0,384 litre.

Le tableau de la figure 3 donne une estimation du volume global du réservoir de mélange d'additifs.

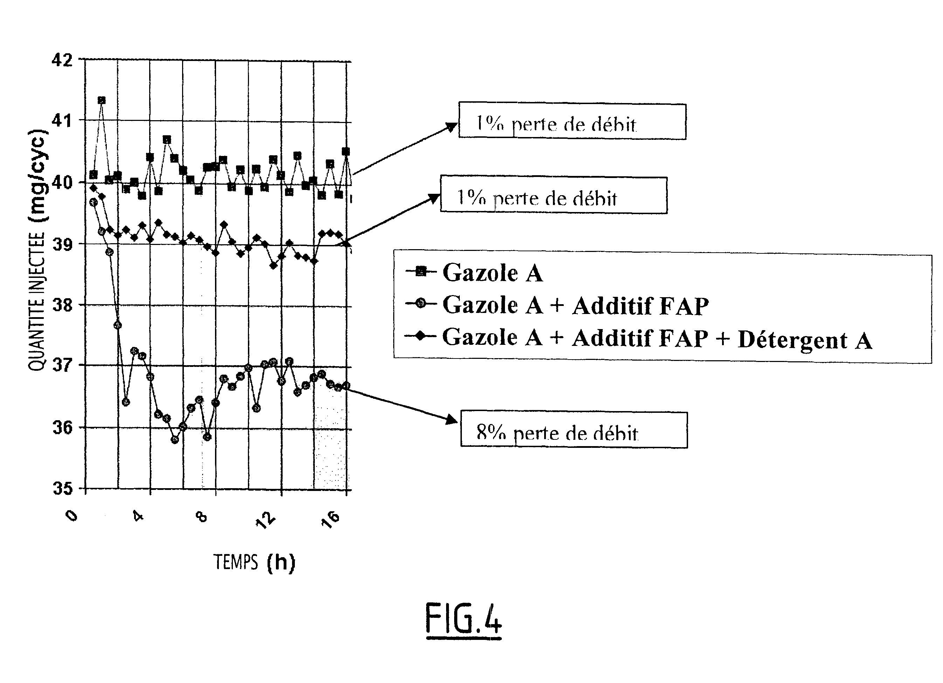

La figure 4 illustre quant à elle l'efficacité du système.

On conçoit en effet à la vue de cette figure que l'incorporation d'additif détergent permet d'éviter et/ou de limiter l'encrassement du système d'alimentation en carburant du moteur.

Cet additif permet en effet d'éviter l'encrassement des injecteurs, des chambres de combustion, des soupapes, etc.

De même, on peut utiliser un additif de réduction de pertes par frottement également appelé « Friction Modifier » ou additif FM, qui permet de réduire les frottements mécaniques dans le circuit carburant du véhicule et du moteur ainsi que les contacts piston-chemise et se traduit par un gain en matière de consommation de carburant.

Ces additifs sont par exemple des esters d'acide gras ou des acides gras avec ou sans fonction OH.

On peut ainsi utiliser un tel additif FM pur ou stabilisé ou mélangé avec un autre additif, ce qui permet non seulement de réduire les pertes mécaniques par frottement et ainsi la consommation en carburant, mais également de favoriser la lubrification du matériel d'injection pour une durabilité accrue et d'améliorer les propriétés du carburant local.

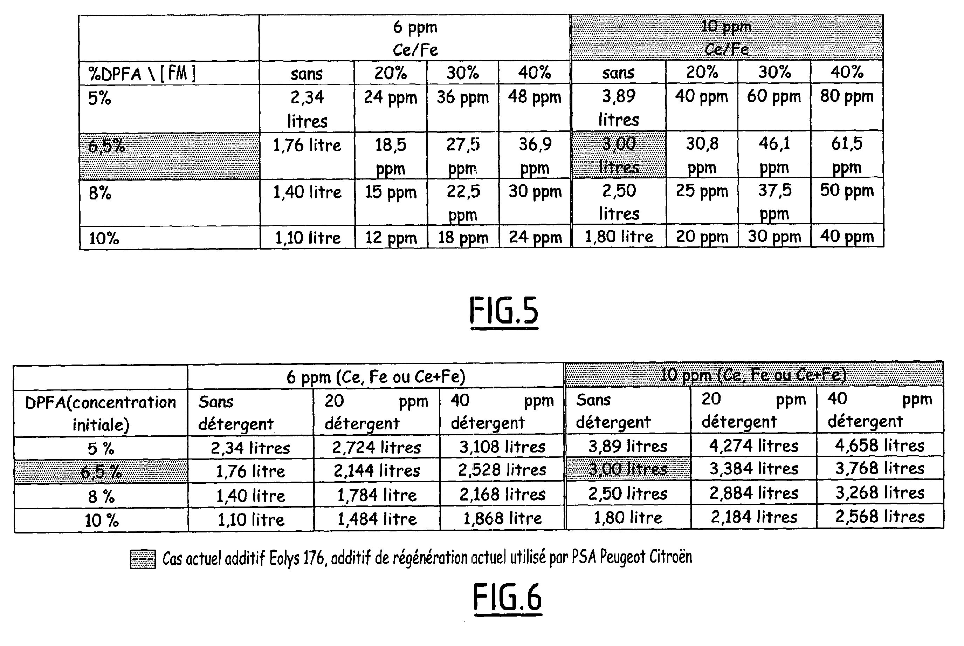

Le tableau de la figure 5, donne un premier exemple de volume utile d'additif à embarquer et la concentration théorique atteignable en additif FM en fonction du dosage nécessaire d'additif FAP (6 ou 10 ppm) et de la quantité d'additif FM introduite dans l'additif FAP (20, 30 ou 40%).

Le tableau de la figure 6 est quant à lui relatif à un tel volume pour une durabilité de 240000 km avec une consommation de 8 litres/100 km. Dans ce cas, si on vise une concentration en additif FM de 40 ppm ou de 20 ppm, le volume nécessaire d'additif FM à embarquer est respectivement de 0,768 litre ou de 0,384 litre.

Des tests ont montré une diminution moyenne de 1% de la consommation du moteur, ce gain pouvant monter jusqu'à 5%.

Des réductions d'émissions de CO, CO2 et de HC ont également été constatées.

Bien entendu, d'autres modes de réalisation encore peuvent être envisagés.

## Revendications

1. Additif pour un dispositif d'introduction automatique en quantités dosées de moyens formant additif dans le réservoir (2) de carburant d'un véhicule automobile comportant des moyens de dépollution disposés dans la ligne d'échappement du moteur (1) du véhicule, pour maintenir à une valeur prédéterminée, la concentration d'additif dans le carburant contenu dans le réservoir (2) et comportant un réservoir (10) pour les moyens formant additif, des moyens (13, 14) d'injection d'additif reliés au réservoir (10) d'additif et au réservoir (2) de carburant, des moyens (17) de mesure de la quantité de carburant introduite dans le réservoir (2) au cours de chaque opération de réapprovisionnement et des moyens (20) de calcul et de commande permettant de calculer la quantité correspondante d'additif à injecter dans le réservoir (2) pour maintenir la concentration d'additif dans le carburant contenu dans le réservoir (2) à la valeur prédéterminée et de commander les moyens (13, 14) d'injection pour réaliser l'injection de la quantité d'additif calculée, **caractérisé en ce que** les moyens formant additif dans le réservoir d'additif (10) comprennent un mélange d'additifs contenant au moins un additif d'aide à la régénération des moyens de dépollution et en outre au moins un autre additif choisi dans le groupe comprenant :
- un additif d'amélioration de la distribution de carburant dans le moteur,
- un additif d'amélioration des performances de fonctionnement du moteur, et
- un additif d'amélioration de la stabilité du fonctionnement du moteur.

2. Additif selon la revendication 1, **caractérisé en ce que** l'additif d'amélioration de la distribution de carburant dans le moteur comporte un additif antimousse, un additif dégivrant, un additif d'opérabilité à froid, un additif d'écoulement et/ou un additif anti-corrosion.

3. Additif selon la revendication 1, **caractérisé en ce que** l'additif d'amélioration des performances de fonctionnement du moteur comporte un additif procétane, un additif détergent, un additif d'amélioration du pouvoir lubrifiant du carburant, un additif inhibiteur de fumées et/ou un additif de réduction des pertes par friction dans le moteur.

4. Additif selon la revendication 1, **caractérisé en ce que** l'additif d'amélioration de la stabilité de fonctionnement du moteur comporte un additif anti-oxydant, un additif stabilisateur, un additif désactivateur de métaux et/ou un additif dispersant.
